# EUROPÄISCHE PATENTSCHRIFT

(11) **EP 2 845 714 B1**
(45) Veröffentlichungstag und Bekanntmachung des Hinweises auf die Patenterteilung: **25.09.2019**
(21) Anmeldenummer: 14182147.0
(22) Anmeldetag: 25.08.2014
(51) Int. Cl.: B29C 49/06, B29C 49/64, B29C 49/68, B29C 49/42, B29C 49/28, B29K 105/00

(54) **Vorrichtung und Verfahren zum Erwärmen von Kunststoffvorformlingen mit gleichzeitiger Montage bzw. Demontage von Halteelementen und Abschirmelementen**
Method and device for heating plastic pre-forms with simultaneous installation or removal of carrier units and screening elements
Dispositif et procédé destinés au chauffage d'ébauches en plastique avec montage ou démontage simultané d'éléments de support et d'éléments de masquage

(30) Priorität: 23.08.2013 DE 102013109174
(43) Veröffentlichungstag der Anmeldung: 11.03.2015
(73) Patentinhaber: Krones AG, 93073 Neutraubling (DE)
(72) Erfinder: Winzinger, Frank, 93073 Neutraubling (DE)
(74) Vertreter: Bittner, Bernhard

(56) Entgegenhaltungen:
- WO-A1-03/024693
- DE-A1-102008 030 863
- FR-A1- 2 950 284
- JP-A- 2006 181 756

## Beschreibung

Die vorliegende Erfindung bezieht sich auf eine Vorrichtung und ein Verfahren zum Erwärmen von Kunststoffvorformlingen. Im Bereich der Kunststoff verarbeitenden Industrie und insbesondere der Getränke herstellenden Industrie ist es seit langem bekannt, dass Kunststoffflaschen aus Kunststoffvorformlingen durch Blasformung geformt werden. Dabei werden diese Kunststoffvorformlinge zunächst in einer Erwärmungseinrichtung erwärmt und dann in diesem erwärmten Zustand expandiert.

Aus dem Stand der Technik sind unterschiedliche Erwärmungsvorrichtungen bekannt. So sind beispielswiese Infrarotöfen bekannt, durch welche hindurch die Kunststoffvorformlinge transportiert werden sowie auch Mikrowellenöfen. Bei derartigen Erwärmungsvorrichtungen ist üblicherweise eine Vielzahl von Trägern für die einzelnen Kunststoffvorformlinge hintereinander an einen Hauptträger angeordnet. Dabei ist es wünschenswert, einen geringen Abstand zwischen den jeweils benachbarten Kunststoffvorformlingen zu haben.

Weiterhin weisen derartige Vorrichtungen auch üblicherweise Abschirmelemente auf, welche die Mündungen der Kunststoffvorformlinge, die selbst nicht umgeformt werden, vor allzu großer Erwärmung schützen. Bei derartigen Vorrichtungen ist jedoch in regelmäßigen Abständen oftmals ein Garniturenwechsel vorzunehmen. Zu diesem Zweck werden sowohl die Halteelemente als auch die besagten Abschirmplatten einzeln ausgewechselt, was mitunter sehr aufwendig ist.

Durch die WO 03/024693 und die DE 10 2008 030 863 sind Vorrichtungen gemäß den Oberbegriffen der Ansprüche 1 und 10 und ein Verfahren gemäß dem Oberbegriff des Anspruchs 13 bekannt.

Der vorliegenden Erfindung liegt daher die Aufgabe zugrunde, für derartige Vorrichtungen zum Erwärmen von Kunststoffvorformlingen insbesondere einen Garniturenwechsel zu erleichtern bzw. weniger zeitintensiv auszugestalten. Diese Aufgabe wird erfindungsgemäß durch die Gegenstände der unabhängigen Ansprüche gelöst. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge entlang eines vorgegebenen Transportpfades transportiert. Dabei sind an dieser Transporteinrichtung eine Vielzahl von Halteelementen zum Halten der Kunststoffvorformlinge sowie eine Vielzahl von Abschirmelementen zum Abschirmen von Wärme (von Bereichen der Kunststoffvorformlinge) angeordnet. Erfindungsgemäß weist die Vorrichtung eine Vielzahl von Trägereinheiten auf, an denen zumindest ein Teil (Bestandteil und/oder Anteil) insbesondere zwei oder mehrere Teile, der Halteelemente sowie wenigstens ein Teil (Bestandteil und/oder Anteil), insbesondere zwei oder mehrere Teile, der Abschirmelemente angeordnet sind und diese Trägereinheiten sind gemeinsam mit den daran angeordneten Teilen der Halteelemente und den Abschirmelementen an oder von der Transporteinrichtung montierbar und/oder demontierbar.

Auf diese Weise wird erreicht, dass das jeweilige Halteelement und das Abschirmelement gleichzeitig (d.h. in einem Demontageschritt) abnehmbar sind und/oder auch gleichzeitig (d.h. in einem Montageschritt) montierbar sind. Vorzugsweise ist jeweils ein Abschirmelement genau einem Halteelement zugeordnet. Es wäre jedoch auch denkbar, dass ein Abschirmelement mehreren Halteelementen zugeordnet ist oder umgekehrt mehrere Abschirmelemente einem Halteelement. Vorteilhaft ist das gesamte Abschirmelement an der Trägereinheit angeordnet. Im Gegensatz zu Vorrichtungen aus dem Stand der Technik wird es im Rahmen der Erfindung ermöglicht, dass die gesamte Trägereinheit beispielsweise für einen Garniturenwechsel ausgetauscht werden kann. Auf diese Weise können die Wechselzeiten erheblich verringert werden.

Mit anderen Worten sind vorteilhaft die Halteelemente und die Abschirmelemente gemeinsam entnehmbar und/oder in einem zusammengesetzten Zustand entnehmbar oder auswechselbar.

Es wäre dabei bevorzugt möglich, dass die Abschirmelemente und Halteelemente jeweils an einem gemeinsamen Halter befestigt sind und beispielsweise zusammen mit diesen aus der Vorrichtung entnehmbar sind.

Insbesondere sind jeweils ein Abschirmelement und ein Halteelement einem gemeinsamen Halter zugeordnet und insbesondere mit diesem lösbar mit der Vorrichtung bzw. Transporteinrichtung verbunden.

Vorteilhaft handelt es sich bei dem Abschirmelement um eine Abschirmplatte, welche im Betrieb zumindest zeitweise unterhalb einer Mündung des Kunststoffvorformlings liegt und diesen so vor allzu starker Erwärmung abschirmt. Zumindest zeitweise heißt, dass sich die Abschirmplatte im Moment der Vorformlingsaufnahme und/oder -abgabe auch oberhalb einer Mündung befinden kann. "Unterhalb" in diesem Sinn bedeutet insbesondere, dass das Abschirmelement auf einer Ebene angeordnet ist, welche den Vorformling, insbesondere senkrecht zu seiner Längsachse, in einem Bereich schneidet, welcher die Grenze zwischen einem zu erwärmenden und einem nicht zu erwärmenden Bereich des Vorformlings bildet.

Bei einer weiteren vorteilhaften Ausführungsform weist die Vorrichtung eine Vielzahl von Erwärmungseinheiten zum Erwärmen der Kunststoffvorformlinge auf. Vorteilhaft sind dabei diese Erwärmungseinheiten stationär angeordnet. So könnte beispielsweise eine Vielzahl von Heizkästen vorgesehen sein, welche entlang des Transportpfads der Kunststoffvorformlinge angeordnet sind und welche die Kunststoffvorformlinge mittels Infrarot erwärmen. Es könnte sich jedoch bei den Erwärmungseinrichtungen um Mikrowellen- Heißluft- oder Lasererwärmungseinrichtungen handeln.

Vorteilhaft ist die jeweilige Trägereinheit ohne Einsatz von Werkzeug von der Transporteinrichtung entfernbar. So könnten beispielsweise bajonettartige Verschlüsse vorgesehen sein, welche eine Entfernung der Trägereinheit von Hand ermöglichen.

Vorteilhaft ist die Trägereinheit von der Transporteinrichtung durch eine Bewegung entfernbar, welche nur in eine Richtung bzw. nur in einer Ebene verläuft. Bei den hier genannten Vorrichtungen sind, wie oben erwähnt, die einzelnen Kunststoffvorformlinge möglichst nah aneinander angeordnet und daher auch die Halteelemente sehr nah aneinander angeordnet. Insbesondere durch eine Bewegung, welche senkrecht zu einem Transportpfad der Kunststoffvorformlinge verläuft, ist dabei eine sehr bequeme Entnahme der Trägereinheit mit den darin angeordneten Abschirm- und Halteelementen denkbar.

Vorteilhaft weist die Transporteinrichtung eine umlaufende Kette oder ein umlaufendes Band auf. Es könnte jedoch auch eine um eine vorgegebene Drehachse vorgesehene Trägereinrichtung vorgesehen sein.

Bei einer weiteren vorteilhaften Ausführungsform ist wenigstens ein Halteelement wenigstens zweiteilig ausgebildet und zwischen den Teilen des Halteelements besteht eine lösbare Verbindung. Auf diese Weise kann beispielsweise ein oberer Teil des Halteelements, der bevorzugt nicht direkt mit dem Kunststoffvorformling in Kontakt kommt, an der Transporteinrichtung verbleiben und ein unterer Teil des Halteelements, der den Kunststoffvorformling hält, bzw. trägt kann mit der Trägereinheit abgenommen werden. Vorteilhaft handelt es sich bei den Halteelementen um Haltedorne, welche in eine Mündung der Kunststoffvorformlinge einführbar sind, um diese so zu halten. Es könnte sich aber auch um Außengreifer handeln, welche den Kunststoffvorformling radial von außen greifen oder klemmen.

Damit sind bevorzugt das Abschirmelement und das Halteelement gemeinsam mit einem Träger aus der Heizeinrichtung entnehmbar.

Die Greiffunktion des Halteelements kann aktiv (über mittels eines Antriebs (feststehende Steuerkurve, Motor, Piezoelement, Magnet etc.) steuerbare bzw. bewegbare Klemmbacken) oder passiv (über federbelastete Klemmbacken) bewerkstelligt werden.

Die hier vorgeschlagene Erfindung ist sowohl in einem Rundläuferofen als auch in einem Linearofen einsetzbar. Im Arbeitsbetrieb wird oftmals auch eine Längsbewegung des Halteelements, das heißt eine Bewegung in einer Längsrichtung des zu erwärmenden Kunststoffvorformlings, vorgenommen, beispielsweise zu dem Zweck, dass das Halteelement in die Mündung dieses Kunststoffvorformlings eintaucht. Hinsichtlich dieser Längsbewegung ist das Halteelement bzw. die Trägereinheit bevorzugt so ausgestaltet, dass derjenige Teil des Halteelements, der den Kunststoffvorformling hält, in einer axialen Richtung befestigt ist. Dabei wäre es auch denkbar, dass ein Teil des Halteelements drehfest mit einer Trägereinheit bzw. einer Aufnahme verbunden ist.

Vorteilhaft weist die Vorrichtung auch Dreheinheiten auf, welche während der Erwärmung der Kunststoffvorformlinge eine Drehung derselben um deren Längsachse ermöglichen. Auf diese Weise wird eine gleichmäßige Erwärmung der Kunststoffvorformlinge erreicht.

Es wäre jedoch auch denkbar, dass das Halteelement oder wenigstens ein Bestandteil desselben nur in einer axialen Richtung (zur Aufnahme) gesichert ist, aber gegenüber der Trägereinheit drehbar gelagert ist. In diesem Falle ist es denkbar, dass beispielsweise ein Eingriff in eine Transportkette oder einen Zahnriemen zum Zwecke der Drehung unterhalb der besagten Aufnahme erfolgt.

Bei einer weiteren Ausgestaltung wäre es auch denkbar, dass sich das Abschirmelement (insbesondere bei direkter Anbringung an dem Halteelement) mit dem Halteelement mitdreht. Bei dieser Ausgestaltung wäre es denkbar, dass das Abschirmelement einen kreisförmigen Querschnitt aufweist.

Bei einer weiteren vorteilhaften Ausgestaltung ermöglicht die oben erwähnte lösbare Verbindung zwischen den Teilen des Halteelements die Übertragung von Drehmomenten. So könnte beispielsweise ein nicht kreisförmiger Vorsprung eines Teils in einen darauf angepassten nicht kreisförmigen Aufnahmeabschnitt des anderen Teils des Halteelements eingreifen. Vorteilhaft ist jedoch diese lösbare Verbindung durch eine lineare Bewegung trennbar. Insbesondere kann dabei derjenige Teil des Halteelements, der den Kunststoffvorformling selbst hält, von einem anderen Teil durch eine Bewegung mit einer Komponente in der Längsrichtung des zu erwärmenden Kunststoffvorformlings abgezogen werden.

Bei einer weiteren vorteilhaften Ausführungsform ist das an der Trägereinheit angeordnete Teil des Halteelements drehbar gegenüber dieser Trägereinheit angeordnet. Insbesondere ist dabei das besagte Teil des Halteelements bezüglich einer Längsrichtung des zu erwärmenden Kunststoffvorformlings bzw. einer Längsrichtung des Halteelements drehbar angeordnet.

Bei einer weiteren vorteilhaften Ausführungsform weist die Trägereinheit einen Aufnahmeraum zur Aufnahme von Bestandteilen des Halteelements auf. Vorteilhaft weist diese Trägereinheit auch ein Anschlagelement auf, welches eine Bewegung des Halteelements in der besagten Längsrichtung begrenzt und damit insbesondere verhindert, dass das Halteelement aus der Trägereinheit herausfallen kann.

Bei einer weiteren vorteilhaften Ausführungsform sind an der Transporteinrichtung Befestigungseinrichtungen angeordnet, an denen wiederum die Trageinheiten lösbar angeordnet sind. So könnten beispielsweise an Ketten bzw. an einer Transportkette Grundhalter bzw. Grundträger angeordnet sein, an denen wiederum lösbar die einzelnen Trägereinheiten befestigt werden können.

An diesen Grundträgern können beispielsweise die besagten zweiten Teile der Halteelemente angeordnet sein. Dabei ist es insbesondere möglich, dass diese zweiten Teile drehbar gegenüber den Grundträgern angeordnet sind. Es wäre jedoch auch, wie oben erwähnt, eine drehfeste Anordnung dieser zweiten Teile der Halteelemente an den Grundträgern denkbar.

Bei einer weiteren vorteilhaften Ausführungsform sind die Trageeinheiten über lösbare Befestigungseinrichtungen an der Transporteinrichtung angeordnet. Vorteilhaft sind die Trageeinheiten über die lösbaren Befestigungseinrichtungen an den oben erwähnten Grundträgern, die beispielsweise fest an der Transporteinrichtung angeordnet sein können, befestigt.

Vorteilhaft ist dabei wenigstens eine dieser Befestigungseinrichtung, wie oben erwähnt, eine durch manuellen Eingriff lösbare Befestigungseinrichtung und bevorzugt ist die Befestigungseinrichtung aus einer Gruppe von Befestigungseinrichtungen ausgewählt, welche bajonettartige Befestigungseinrichtungen oder magnetische Befestigungseinrichtungen enthält.

Bei einer weiteren vorteilhaften Ausführungsform ist das Halteelement zweiteilig oder mehrteilig ausgebildet.

Bei einer weiteren vorteilhaften Ausführungsform ist das an der Trägereinheit angeordnete Teil des Halteelements in seiner Längsrichtung gegenüber der Trägereinheit verschiebbar angeordnet. Durch diese verschiebbare Anordnung wird insbesondere auch ein Eintauchen der Halteelemente in die Kunststoffvorformlinge und/oder ein Herausziehen der Halteelemente aus den Kunststoffvorformlingen ermöglicht.

Bei einer weiteren vorteilhaften Ausführungsform weist die Trägereinheit ein Vorspannmittel auf, um das an der Trägereinheit angeordnete Teil des Halteelements in seiner Längsrichtung vorzuspannen. Vorteilhaft wird dabei das Halteelement bzw. das Teil des Halteelements auf das andere Teil des Halteelements zu gespannt. Bei einer Vorrichtung, bei der die Kunststoffvorformlinge mit den Mündungen nach oben hängend transportiert werden, wird damit das Halteelement, welches den Kunststoffvorformling hält, nach oben hin vorgespannt.

Die vorliegende Erfindung ist weiterhin auf ein Trägermodul bzw. eine Haltevorrichtung für Halteelemente zum Halten von Kunststoffbehältnissen gerichtet. Dieses Halte- und Abschirmmodul weist dabei eine Trägereinheit auf, an der ein Abschirmelement zum Abschirmen von Wärme sowie ein des Halteelements angeordnet sind.

Erfindungsgemäß weist die Trägereinheit weiterhin Befestigungsmittel auf, um gemeinsam mit dem Abschirmelement und dem Halteelement an einer Transporteinrichtung montiert und/oder von einer Transporteinrichtung demontiert zu werden.

Bevorzugt ist das Trägermodul in der obigen Weise ausgestaltet. Vorteilhaft ist das Halteelement beweglich an der Trägereinheit angeordnet. Besonders bevorzugt ist das Halteelement drehbar und/oder verschiebbar an der Trägereinheit angeordnet.

Bei einer weiteren vorteilhaften Ausführungsform ist wenigstens einem Halteelement genau ein Abschirmelement zugeordnet und ist bevorzugt jeweils genau ein Halteelement genau einem Abschirmelement zugeordnet. Besonders bevorzugt sind dabei dieses Halteelement sowie dieses Abschirmelement an genau einer Trägereinheit angeordnet. Besonders bevorzugt ist dabei diese Trägereinheit - bevorzugt lösbar - mit einer Transporteinrichtung verbunden. Dabei kann es sich insbesondere um die oben erwähnte Transporteinrichtung handeln.

Bei einer weiteren vorteilhaften Ausführungsform weist das Abschirmelement eine Öffnung auf, die größer ist als ein Durchmesser eines zu transportierenden Kunststoffvorformlings. Bevorzugt ist die Haltevorrichtung weiterhin derart beschaffen, dass der Kunststoffvorformling mit seinem Mündungsbereich durch diese Öffnung - insbesondere beim Transport - hindurchragt.

Diese hier unter Bezugnahme auf die Haltevorrichtung beschriebenen Ausgestaltungen können in entsprechender Weise auch auf die oben beschriebene Vorrichtung zum Erwärmen von Kunststoffvorformlingen bzw. die ebenfalls oben beschriebene Transporteinrichtung Anwendung finden.

Die vorliegende Erfindung ist weiterhin auf ein Verfahren zum Montieren oder Demontieren von Halteelementen und Abschirmelementen an eine oder von einer Vorrichtung zum Erwärmen von Kunststoffvorformlingen gerichtet. Dabei dienen die Halteelemente zum Halten von Kunststoffvorformlingen und die Abschirmelemente zum Abhalten von Wärme von einem Gewindebereich der Kunststoffvorformlinge.

Erfindungsgemäß sind zumindest Teile der Halteelemente sowie wenigstens Teile der Abschirmelemente an Trägereinheiten angeordnet und diese Trägereinheiten werden gemeinsam mit den daran angeordneten Teilen der Halteelemente und Abschirmelemente an eine oder von einer Transporteinrichtung montiert oder demontiert. Auch wäre es möglich, dass die Halteelement und die Abschirmelemente gleichzeitig, also insbesondere in einem gemeinsamen Arbeitgang gewechselt werden.

Es wäre jedoch auch möglich, dass dieses Abschirmelement selbst einen Träger aufweist, an dem das Halteelement ausgebildet ist oder umgekehrt, das Halteelement selbst auch den Träger darstellt, an den wiederum das Abschirmelement angeordnet ist. Damit muss es sich einerseits bei der Trägereinheit und andererseits bei den Halte- und Abschirmelementen nicht notwendig um unterschiedliche Bauteile handeln.

Falls beispielsweise das Halteelement auch eine Trägereinheit darstellt, wäre es denkbar, dass diese Trägereinheit eben durch denjenigen Abschnitt des Halteelements gebildet ist, an dem auch das Abschirmelement angeordnet ist.

Vorteilhaft werden die Halteelemente zeitgleich mit den diesen zugeordneten Abschirmelementen montiert oder demontiert.

Insbesondere liegt der Transportpfad der Vorformlinge innerhalb der Vorrichtung im Wesentlichen in einer horizontalen Ebene. Insbesondere findet die Eintauchbewegung der Haltelemente in die Vorformlinge in einer zu dieser Ebene senkrechten Richtung statt. Diese Richtung ist somit insbesondere zum Erdmittelpunkt hin gerichtet. Die (verlängerte) Drehachse der Halteelemente bzw. Vorformlinge schneidet insbesondere auch den Erdmittelpunkt.

Insbesondere ist die Trägereinheit lösbar mit einem Grundträger verbunden, wobei auch das Halteelement und/oder das Abschirmelement lösbar mit der Trägereinheit verbunden ist / sind. Insbesondere handelt es sich bei mindestens einer, insbesondere bei allen, dieser lösbaren Verbindung um einen von Hand lösbaren (ohne Zuhilfenahme von Werkzeug) Verschluss, insbesondere um einen Bajonettverschluss oder eine magnetische (Steck-) Verbindung. Es wäre aber auch möglich, andere Befestigungsmittel wie Schrauben einzusetzen.

Das Abschirmelement ist insbesondere rechteckig oder quadratisch ausgebildet und weist bevorzugt ein Loch in seiner Mitte auf, durch welches sich der Vorformling bzw. das Halteelement zumindest zeitweise und bereichsweise erstrecken. Diese Ausbildung erlaubt insbesondere eine Anordnung zweier benachbarter Abschirmelemente zueinander derart, dass möglichst wenig Wärme oder Strahlung zwischen diesen in den Bereich der Mündungen der Vorformlinge durchdringen kann. Der Spalt zwischen zwei Abschirmelementen ist insbesondere kleiner als 1 cm, bevorzugt weniger als 3 mm. In diesem Fall sind die Abschirmplatten im Vergleich zum Grundträger stationär bzw. unbeweglich angeordnet.

Die Funktion "Drehen des Halteelements" kann durch einen Antrieb bewerkstelligt werden, welcher sein Drehmoment über eine Kupplung an der Trennstelle zum Lösen des Halteelements überträgt, oder durch einen Antrieb, welcher direkt auf das Halteelement einwirkt.

Genauso verhält es sich mit der Funktion "Absenken bzw. Anheben des Halteelements": hier kann der Antrieb entweder direkt auf das Halteelement einwirken und es bewegen, oder der Antrieb treibt ein Element an, welches nicht mit ausgewechselt wird und die Kraft wird über dieses Element auf das Halteelement übertragen.

Alternativ können in beiden Fällen auch magnetisch wirkende Antriebe eingesetzt werden, so dass mechanische Kupplungen bzw. zusätzliche Übertragungselemente nicht vorhanden sein müssen.

Die Vorrichtung wird insbesondere kontinuierlich betrieben, d.h. dass während der Erwärmung ein kontinuierlicher Transport der Vorformlinge realisiert ist.

Insbesondere wird eine Vielzahl von Vorformlingen in äquidistanten Abständen zueinander von den Halteelementen der Vorrichtung aufgenommen und insbesondere auch so transportiert.

Insbesondere kann ein Wechsel durch einen neben der Vorrichtung stehenden Automaten automatisch geschehen. Dieser Automat könnte taktweise oder kontinuierlich betrieben werden und Halteelemente und/oder Abschirmungen aus der Vorrichtung mit einem Arm entnehmen und durch neue ersetzen. An dem Automat kann ein Magazin mit einem Vorrat von Wechselteilen angeordnet sein. Es wäre auch denkbar, einen Schnellwechselmechanismus schon kurz vor oder bei Erreichen der Wechselposition beim stationären Automaten durch eine zustellbaren Betätigungsnocken auszulösen, so dass der Automat nur noch die Teile entnehmen und einstecken muss, ohne den Mechanismus zu betätigen. Alternativ wäre es denkbar, die Halteelemente inkl. Abschirmungen durch den Nocken in eine Kiste fallen zu lassen, so dass der Automat nur noch die neuen Halteelemente inkl. Abschirmungen aufstecken muss. Nach dem Wechselbetrieb kann der Automat dann von Hand wieder bestückt werden.

Weitere Vorteile und Ausführungsformen ergeben sich aus den beigefügten Zeichnungen. Darin zeigen:
- Fig. 1: Eine schematische Darstellung einer Vorrichtung zum Herstellen von Kunststoffbehältnissen;
- Fig. 2: eine Darstellung einer Trägereinheit mit einem Abschirmelement sowie einem Halteelement;
- Fig. 3: eine Darstellung eines Halteelements mit Trägereinheit in einer Vorrichtung zum Erwärmen von Kunststoffvorformlingen;
- Fig. 4: drei Darstellungen unterschiedlicher Betriebszustände eines Halteelements;
- Fig. 5a, 5b: zwei Darstellungen zur Veranschaulichung eines Befestigungsmechanismus zum Befestigen des Halteelements;
- Fig. 6: eine Darstellung eines Abschirmelements;
- Fig. 7: eine Darstellung einer erfindungsgemäßen Anordnung in einer weiteren Ausführungsform;
- Fig. 8: eine Darstellung einer erfindungsgemäßen Anordnung in einer weiteren Ausführungsform;
- Fig. 9: eine Darstellung einer erfindungsgemäßen Anordnung unter Berücksichtigung von Führungskurven;
- Fig. 10: eine Darstellung ähnlich Fig. 9, jedoch ohne eine obere Führungskurve;
- Fig. 11: eine Darstellung einer erfindungsgemäßen Anordnung insbesondere für sterile Anwendungen;
- Fig. 12: eine Darstellung eines Eingriffselements eines Halteelements;
- Fig. 13: eine weitere Darstellung des in Fig. 12 gezeigten Eingriffselements;
- Fig. 14: eine perspektivische Darstellung eines Eingriffselements; und
- Fig. 15: eine Darstellung zu einem automatischen Formatteilwechsel.

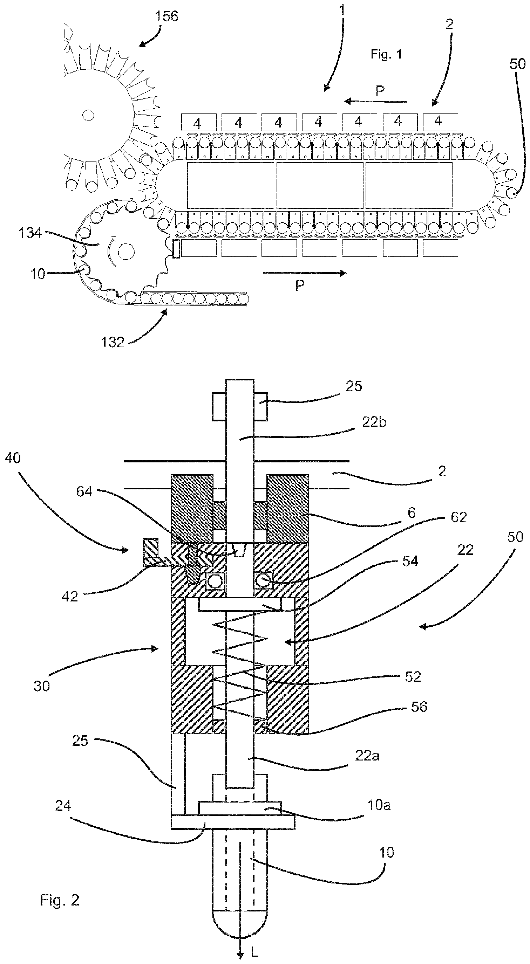

Fig. 1 zeigt eine schematische Darstellung einer Anlage zum Herstellen von Kunststoffbehältnissen. Dabei ist eine erfindungsgemäße Vorrichtung 1 zum Erwärmen von Kunststoffvorformlingen 10 vorgesehen. Diese Vorrichtung weist dabei eine Vielzahl von Heizelementen 4 auf, die entlang eines Transportpfades P der Kunststoffvorformlinge angeordnet sind. Die Heizelemente 4 sind auch auf der anderen Seite der Vorrichtung 1 vorhanden, nur nicht mit Bezugszeichen versehen.

Das Bezugszeichen 50 kennzeichnet schematisch eine Haltevorrichtung zum Halten der Kunststoffvorformlinge 10. Diese werden über eine Zuführeinrichtung 132, wie eine Zuführschiene, zunächst in einer Vereinzelungseinrichtung 134 vereinzelt und dann der Vorrichtung 1 zugeführt. Das Bezugszeichen 2 kennzeichnet in seiner Gesamtheit eine Transporteinrichtung zum Transportieren der Kunststoffvorformlinge, die hier insbesondere als umlaufende Kette ausgebildet sind.

Das Bezugszeichen 156 kennzeichnet eine Transporteinrichtung, welche die erwärmten Kunststoffvorformlinge an eine weitere Vorrichtung, wie insbesondere eine Streckblasmaschine oder eine Sterilisationseinrichtung, übergibt.

Fig. 2 zeigt eine Detaildarstellung einer erfindungsgemäßen Vorrichtung. Dabei ist eine Transporteinrichtung 2 (nur schematisch dargestellt) beispielsweise in Form einer Kette vorgesehen, an der die Haltevorrichtung 50 angeordnet ist. Diese Haltevorrichtung 50 weist einen fest (etwa an einer Transportkette oder einem Transportband) angeordneten Grundträger 6 auf. Die Trägereinheit 30 ist über eine lösbare Befestigungseinrichtung 40 an dem Grundträger 6 angeordnet. Bei dieser Befestigungseinrichtung 40 kann es sich beispielsweise um eine Befestigungseinrichtung mit einem Handhebel handeln, der mittels eines Vorspannmittels wie einer Feder in einer Ausgangsstellung vorgespannt ist. Daneben kann jedoch dieser Handhebel 78 auch in einer Aufnahme befestigt sein, beispielsweise, wenn ein Halter einen zugehörigen Einsteckkonus aufweist.

Das Bezugszeichen 22b kennzeichnet einen zweiten Teil des Halteelements, der bei dieser gezeigten Ausgestaltung an der Transporteinrichtung angeordnet ist bzw. auch bei einer Demontage an der Transporteinrichtung verbleibt. An diesem zweiten Teil 22b des Halteelements kann ein Zahnrad 25 angeordnet sein, welches zur Drehung des Heizdorns bzw. des Halteelements dient. Wie oben erwähnt, kann dieses Zahnrad auch an dem unteren Teil 22a des Halteelements befestigt sein, insbesondere, wenn das Halteelement bzw. die Trägereinheit 30 eine nicht gezeigte seitliche Aussparung aufweist, durch welche eine Kette hindurch laufen kann. In dem Fall könnte auf das zweite Teil 22b verzichtet werden. Das Bezugszeichen 64 kennzeichnet einen Drehmitnehmer, der die Drehung von dem zweiten Teil 22b des Halteelements 22 auf den ersten Teil 22a des Halteelements 22 überträgt.

Das Bezugszeichen 10 kennzeichnet einen Kunststoffvorformling, der einen Tragring 10a aufweist und der durch einen Eingriff des ersten Teils 22a des Halteelements 22 gehalten wird.

Das Bezugszeichen 24 kennzeichnet das oben erwähnte Abschirmelement, welches zum Abschirmen von Wärme von einem Gewindebereich des Kunststoffvorformlings 10 dient. Das Bezugszeichen 25 kennzeichnet Haltestifte, mit denen das Abschirmelement an der Trägereinheit 30 angeordnet ist. Alternativ zu den Haltestiften kann auch ein Halteblech eingesetzt werden. Dabei sind bevorzugt zusätzlich weitere Befestigungsmittel (nicht gezeigt) vorgesehen, welche auch eine Demontage des Abschirmelements 24 von der Trägereinheit 30 ermöglichen. Vorteilhaft ist damit das Abschirmelement 24 zusätzlich abnehmbar verschraubt oder es kann auch mit einem Schnellverschluss an der Trägereinheit angeordnet sein. Es ist in der Praxis nämlich denkbar, dass im Einzelfall auch nur das Abschirmelement 24 oder nur das Halteelement 22, 22a ausgewechselt werden soll, beispielsweise, wenn zwei Kunststoffvorformlinge 10 mit gleichem Innendurchmesser erwärmt werden sollen, welche jedoch unterschiedlich große Tragringe aufweisen. In diesem Falle wäre nur der Wechsel des Abschirmelements 24 erforderlich.

Das Bezugszeichen 54 kennzeichnet einen oberen Anschlag des Halteelements bzw. dessen Teils 22a und das Bezugszeichen 62 eine Lagerung, mit welcher das Teil 22a des Halteelements drehbar gegenüber der Trägereinheit 30 gelagert ist. Über ein Vorspannelement 52, welches an einem Anschlag 56 anliegt, kann das erste Teil 22a des Halteelements nach oben vorgespannt werden und damit auch auf das zweite Teil 22b des Halteelements vorgespannt werden. Hierdurch ist bei einer Kurvensteuerung lediglich eine nur in einer Richtung zeigende Kurve notwendig. In anderen Worten muss die Kurve das Haltelement nicht nochmal hochholen.

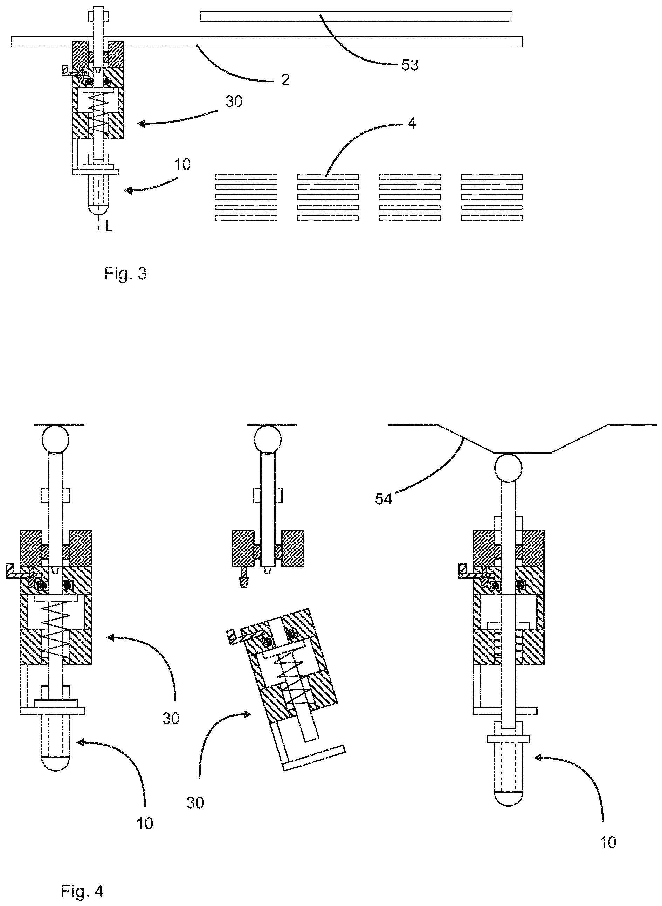

Fig. 3 zeigt eine weitere Darstellung einer erfindungsgemäßen Vorrichtung. Bei dieser Darstellung sind auch die Heizelemente 4 gezeigt, an denen der Kunststoffvorformling 10 vorbeitransportiert wird. Ein Heizelement 4 weist mehrere Infrarotstrahler auf, welche in unterschiedlichen Höhen angeordnet sind und welche insbesondere separat voneinander ansteuerbar sind. So können unterschiedliche Bereiche entlang der Längsachse des Vorformlings unterschiedlich erwärmt werden. Auch zwei benachbarte Heizelemente 4 können unterschiedlich bzgl. ihrer Leistung angesteuert werden. Weiterhin ist hier wieder die Transportkette gezeigt sowie ein Drehelement, wie beispielsweise ein Antriebsmittel oder eine Verzahnung 53 oder eine Kette, welche eine Drehung des Halteelements bzw. Dorns ermöglicht. Es wäre jedoch alternativ auch denkbar, dass anstelle des Antriebsmittels 53 jedes einzelne Halteelement einen separaten Antrieb und insbesondere einen Direktantrieb aufweist. So könnten beispielsweise Elektromotoren vorgesehen sein, welche die Halteelemente zur Rotation bezüglich ihrer Längsrichtung L antreiben. Alternativ wäre auch eine magnetische Kurve denkbar, wenn man das Zahnrad 25 durch Permanentmagnete ersetzen würde. Hier ist zu erkennen, dass sich die Abschirmung 24 und der in bzw. über ihr verborgene Tragring 10a des Vorformlings 10 direkt oberhalb der obersten Position der Heizelmente 4 befinden.

Fig. 4 zeigt drei unterschiedliche Arbeitsstellungen eines erfindungsgemäßen Halteelements. Bei der linken Darstellung ist ein Arbeitsbetrieb gezeigt, bei dem das Halteelement mit dem daran angeordneten Kunststoffvorformling 10 etwa durch einen Heiztunnel transportiert wird. Die mittlere Darstellung zeigt einen Schnellwechsel, bei dem die Trägereinheit mit dem daran angeordneten Abschirmelement bzw. dem Haltelement gerade von dem Grundträger gelöst wurde. Die rechte Darstellung veranschaulicht eine Position, bei der das Halteelement in den Kunststoffvorformling 10 eintaucht. Hier ist eine Führungskurve 55 vorgesehen, welches dieses Eintauchen in den Kunststoffvorformling 10 bewirkt. Das Element 22b überträgt dabei die Kraft des Antriebs 54 auf das Halteelement.

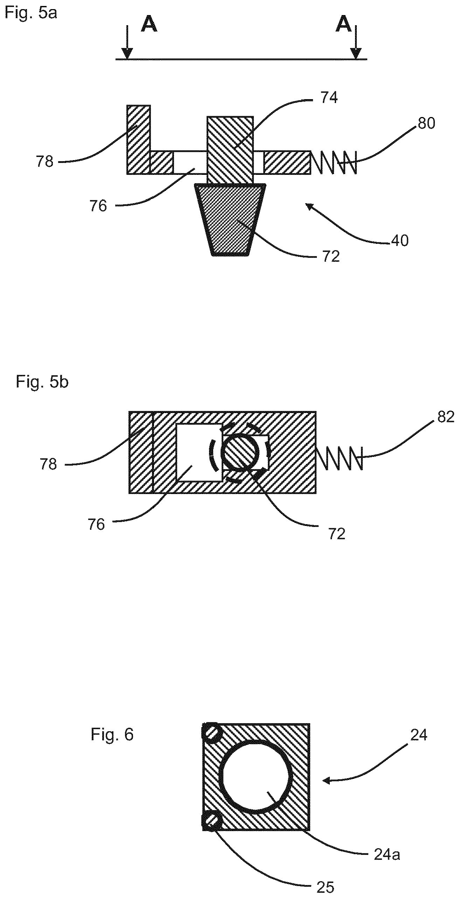

Die Fig. 5a, 5b zeigen das Befestigungsmittel, mit dem die Trägereinheit 30 an dem Grundträger befestigt wird. Dieses Befestigungsmittel weist hier eine an den Grundträger 6 angeordnete Eingriffseinrichtung 72 auf, die an einem Vorsprung 34 angeordnet ist. Diese Eingriffseinrichtung 72 kann wiederum einen Bereich der Trägereinheit hintergreifen. Das Bezugszeichen 82 kennzeichnet ein Vorspannmittel, welches einen Handhebel 78 hier nach links vorspannt, das heißt in eine geschlossene Stellung. Durch Drücken des Handhebels 78 kann die Öffnung 76 nach rechts verschoben werden und damit das Eingriffsmittel von dem Betätigungselement 78 gelöst werden. Es wäre jedoch auch möglich, dass die Befestigungseinrichtung in umgekehrter Weise ausgebildet ist, also beispielsweise das Eingriffselement 72 an der Trägereinheit angeordnet ist.

Fig. 5b veranschaulicht eine Position, in der die Trageeinheit 30 an dem Grundträger 6 befestigt ist. Es kann auch eine schiefe Ebene an dem Elemente 72 angebracht sein, welche derart mit dem Rand der Öffnung 76 zusammenwirkt, dass die Trägereinheit durch die Feder 82 nach oben vorgespannt wird, um eine genaue Positionierung in der Höhe zu erreichen.

Fig. 6 zeigt eine Darstellung des Abschirmelements 24. Man erkennt, dass dieses Abschirmelement 24 eine Öffnung 24a aufweist, durch welche der Kunststoffvorformling zumindest teilweise hindurchführbar ist. Vorteilhaft ist dieses Abschirmelement 24 an seiner Unterseite spiegelnd ausgebildet, um, insbesondere infrarote, Strahlung zu reflektieren. Vorteilhaft ist das Abschirmelement 24 weiterhin rechteckig oder quadratisch ausgebildet, sodass keine Lücke zwischen zwei benachbarten Abschirmelementen entsteht, durch welche Wärmestrahlungen hindurchtreten können. Es wäre möglich und bevorzugt, dass die Öffnung 24a so groß gewählt ist, dass auch der Tragring des Kunststoffvorformlings noch durch sie hindurchgeführt werden kann. Dies ist vorteilhaft, wenn der Kunststoffvorformling von unten angehoben wird oder das Abschirmelement abgesenkt wird.

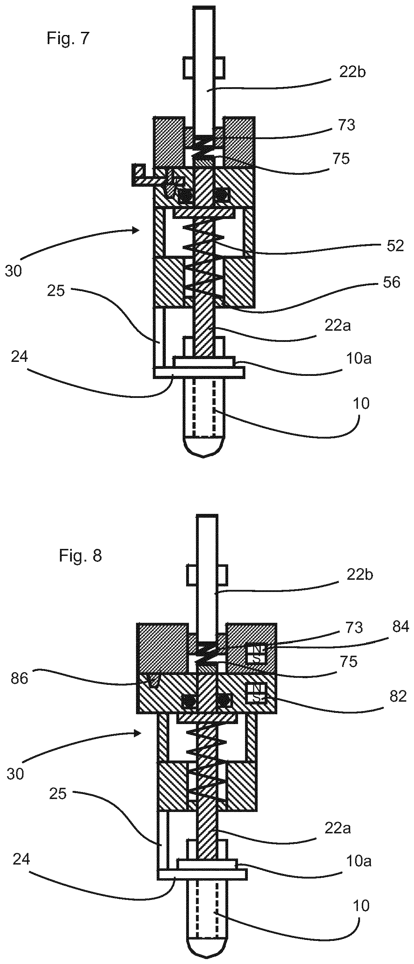

Fig. 7 zeigt eine weitere Ausführungsform einer erfindungsgemäßen Anordnung. Bei dieser Ausgestaltung ist insbesondere der Eingriff zwischen dem ersten Teil 22a und dem zweiten Teil 22b des Halteelements modifiziert. Man kann erkennt hier ein Federelement 73 sowie eine Kupplungseinrichtung 75, wie beispielsweise eine vorgespannte Kupplungsscheibe. Auf diese Weise kann auf das Einfädeln des zweiten Teils 22b des Halteelements in das erste Teil verzichtet werden. Die Drehmomente werden hier über das Kupplungselement 75 übertragen.

Fig. 8 zeigt eine weitere Ausführungsform einer erfindungsgemäßen Anordnung. Auch hier ist wiederum ein Kupplungselement 75 vorgesehen, welches die Rotationsmomente bzw. Drehmomente überträgt. Modifiziert ist jedoch der Verbindungsmechanismus zwischen Trägereinheit 30 und dem Grundträger. Hier sind Magnete 82, 84 vorgesehen, welche diese beiden Elemente aneinanderhalten. Zusätzlich ist ein Zentrierelement 86 vorgesehen, welches bewirkt, dass die Trageeinheit 30 genau in der hierfür vorgesehenen Position gehalten wird. Bei beiden Magneten 82, 84 handelt es sich insbesondere um Permanentmagneten, es wäre aber auch denkbar, zumindest einen Magneten 82, 84 als Elektromagneten auszubilden.

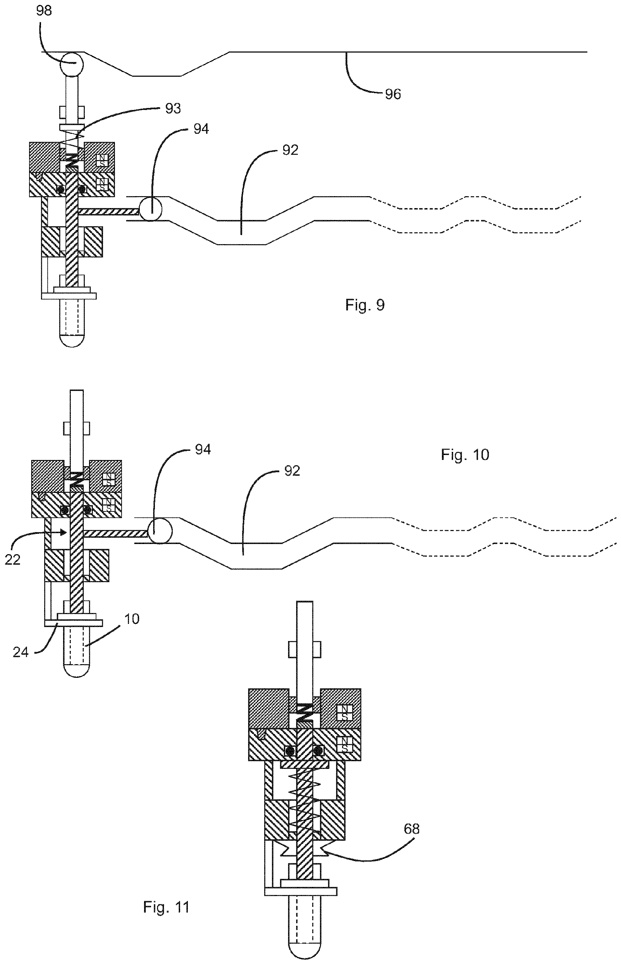

Fig. 9 zeigt eine weitere Ausgestaltung der erfindungsgemäßen Vorrichtung. Hier ist eine erste Führungsrolle 94 vorgesehen, welche mit einer Führungskurve 92 zusammenwirkt.

Hierdurch wird die Eintauchbewegung des Halteelements in den Kunststoffvorformling bewirkt. Der zweite gestrichelte Teil der Führungskurve 92 könnte verwendet werden, um bestimmte Bereiche des Kunststoffvorformlings anders zu temperieren als andere. Auf diese Weise wäre es nämlich möglich, das Halteelement jeweils von der Drehbewegung auszukoppeln (indem das erste Teil 22a abgesenkt oder angehoben wird), sodass eine Drehbewegung für diese Zeit regelmäßig aussetzt und der Kunststoffvorformling nur an der gewünschten Seite erwärmt wird (Preferential heating).

Das Bezugszeichen 93 kennzeichnet eine optionale Feder zum Hochdrücken des zweiten Teils 22b des Halteelements, um dieses beispielsweise gegen eine Führungskurve vorzuspannen. Es wird darauf hingewiesen, dass die Führungskurve nicht wie in Fig. 10 gezeigt in der gleichen Ebene liegt, wie das Halteelement, sondern hinter der Zeichnungsebene. Über die Führungskurve 96 und die Führungsrolle 98 kann ein Absenken und Heben des Haltelementes 22 erreicht werden. Die Position der beiden Führungskurven 96 und 92 und deren Hübe sind hier nur schematisch dargestellt. Der Hub, welcher von Kurve 92 ausgelöst wird, kann nur sehr gering sein. Hingegen sollte der Hub von Kurve 96 mindestens so groß sein, wie der zu schützende Mündungsbereich des Vorformlings 10 lang, so dass dieser bei der Eintauchbewegung bei der Aufnahme komplett über die Abschirmung gehoben werden kann. Fig. 10 zeigt eine weitere Ausgestaltung einer erfindungsgemäßen Vorrichtung. Bei dieser Ausgestaltung ist keine Führungsrolle 98 mehr vorgesehen, sondern nur noch ein Drehmitnehmer. Dabei könnte beispielsweise auch ein zusätzlicher Linearantrieb vorgesehen sein, um die Längsbewegung des Halteelements, das heißt die Bewegung in der Längsrichtung des Kunststoffvorformlings zu erreichen. Hier wird die Funktion "Absenken des Dorns" zur Aufnahme eines Vorformlings komplett von der Kurve 92 übernommen.

Fig. 11 zeigt eine Ausgestaltung der erfindungsgemäßen Vorrichtung, insbesondere für sterile Anwendungen. Man erkennt hier ein zusätzliches Dichtungsmittel 68, wie etwa einen Faltenbalg, das an der Trageeinheit 30 angeordnet ist. Vorteilhaft ist an einem Ende dieses Faltenbalgs dieser bzw. die Dichtungseinrichtung 68 drehbar. Diese kann insbesondere dann zum Einsatz kommen, wenn bereits durch eine der Transportvorrichtung 2 vorgeschaltete Sterilisationseinrichtung die Vorformlinge sterilisiert werden. Weitere Dichtungseinrichtungen der Vorrichtung sind hier nicht gezeigt, können aber zusätzlich vorhanden sein.

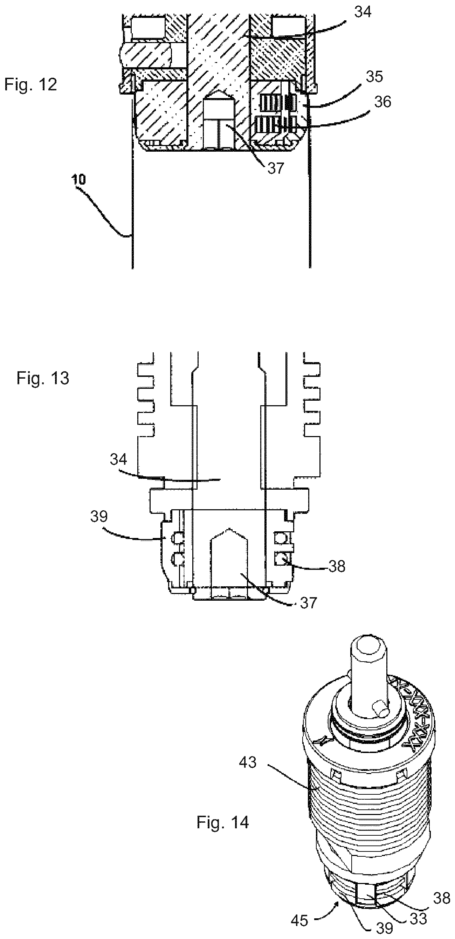

Die Fig. 12 bis 14 zeigen drei Darstellungen eines Haltedorns zum Halten der Kunststoffbehältnisse, insbesondere desjenigen Abschnitts, der in die Mündungen der Kunststoffvorformlinge eintaucht. Man erkennt hier zunächst ein Befestigungsmittel 37, mit dem ein unterer Halteabschnitt an dem übrigen Teil des Halteelements angeordnet ist. Das Bezugszeichen 36 kennzeichnet Vorspannelemente, welche einen Zustellkörper 35 auf die Innenwandung der Mündung des Kunststoffvorformlings zustellen. Das Bezugszeichen 34 kennzeichnet ein Tragelement. In Fig. 13 ist eine weitere Ausgestaltung gezeigt, wobei hier eine Anpresswirkung durch hier ringförmige elastische Elemente 38 erreicht wird, welche ein Zustellelement 39 radial nach außen drücken. Bei der in Fig. 14 gezeigten Darstellung ist ebenfalls wieder ein Grundkörper 43 zu erkennen, an dessen untern Ende Zustellelemente 39 vorgesehen sind, welche nach außen drücken können. Das Bezugszeichen 45 kennzeichnet einen Eingriffsabschnitt (in seiner Gesamtheit), der in die Kunststoffvorformlinge eintaucht.

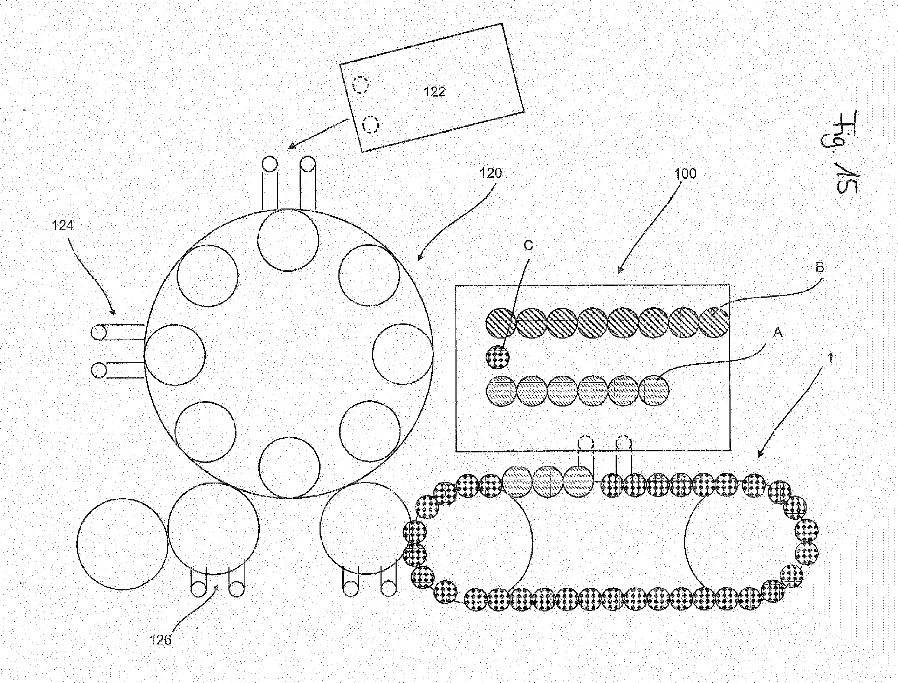

Fig. 15 zeigt eine schematische Darstellung zur Veranschaulichung eines Wechselbetriebs. Wie oben erwähnt, wird bevorzugt das Einwechseln der Abschirmelemente sowie Halteelemente vollautomatisch durchgeführt. Zu diesem Zweck ist es möglich, dass eine Wechseleinrichtung 100 an die Transporteinrichtung 2 gefahren wird und Stück für Stück die einzelnen Halteelemente mit den Abschirmelementen einwechselt. Bei der hier gezeigten Ausführungsform ist insbesondere ein Einwechseln von drei verschiedenen Gruppen von Halteelementen und Abschirmelementen denkbar (A, B, C). Bei der hier gezeigten Darstellung werden gerade die mit C gekennzeichneten Elemente aus der Vorrichtung entnommen und die mit A gekennzeichneten Elemente zugeführt. Das Bezugszeichen 120 kennzeichnet, wie oben erwähnt, eine Blasformmaschine, an der ebenfalls unterschiedliche Elemente ausgewechselt werden können. So können beispielsweise über einen Wechselautomat 122 Blasformen ausgewechselt werden, über eine Andockstelle 124 etwa Elemente wie die Reckstangen ausgewechselt werden und über eine Andockstelle 126 können Halteelemente, wie beispielsweise Greifklammern eingewechselt werden.

Der Wechsel der der Gruppen A, B, C kann insbesondere taktweise betrieben werden. Die Transportvorrichtung wird dabei um eine vordefinierte Anzahl von Teilungen (Abstand zwischen zwei Mittelachsen zweier Haltelemente) verfahren, bleibt stehen und die Elemente werden an dieser Stelle ausgetauscht. Es wäre auch möglich, die vorbestimmte Anzahl an einer Position entlang des Umfangs der Transportvorrichtung zu entnehmen und an einer zweiten, insbesondere benachbarten, Position die nächsten zu verwendenden Elemente einzusetzen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Transporteinrichtung
- 4: Heizelemente
- 10: Kunststoffvorformlinge
- 10a: Tragring
- 22: Halteelement
- 22a: unterer (erster) Teil des Halteelements
- 22b: oberer (zweiter) Teil des Halteelements
- 24: Abschirmelement
- 24a: Öffnung
- 25: Zahnrad
- 30: Trägereinheit
- 34: Tragelement
- 35: Zustellkörper
- 37: Befestigungskörper
- 38: ringförmige Elemente
- 39: Zustellelement
- 40: Befestigungseinrichtung
- 43: Grundkörper
- 45: Eingriffsabschnitt
- 50: Haltevorrichtung
- 52: Vorspannelement
- 53: Antriebsmittel
- 54: oberer Anschlag des Halteelements
- 55: Führungskurve
- 56: Anschlag
- 62: Lagerung
- 64: Drehmitnehmer
- 68: Dichtungseinrichtung
- 72: Eingriffseinrichtung
- 73: Federelement
- 74: Kupplungselement/Vorsprung
- 75: Kupplungseinrichtung
- 76: Öffnung
- 78: Handhebel
- 82: Vorspannmittel
- 82, 84: Magnete
- 86: Zentrierelement
- 92: Führungskurve
- 93: optionale Feder
- 94, 98: Führungsrolle
- 96: Führungskurve
- 100: Wechseleinrichtung
- 120: Blasformmaschine
- 122: Wechselautomat
- 124, 126: Andockstelle
- 132: Zuführeinrichtung
- 134: Vereinzelungseinrichtung
- 156: Transporteinrichtung

- P: Transportpfad
- L: Längsrichtung
- A, B, C: Gruppen von Halte- und Abschirmelementen

## Patentansprüche

1. Vorrichtung zum Erwärmen von Kunststoffvorformlingen (10), mit einer Transporteinrichtung (2), welche die Kunststoffvorformlinge entlang eines vorgegebenen Transportpfades (P) transportiert, wobei an der Transporteinrichtung (2) eine Vielzahl von Halteelementen (22) zum Halten der Kunststoffvorformlinge (10) sowie eine Vielzahl von Abschirmelementen (24) zum Abschirmen von Wärme angeordnet ist,
**dadurch gekennzeichnet, dass**
die Vorrichtung (1) eine Vielzahl von Trägereinheiten (30) aufweist, an denen zumindest ein Teil (22a) der Halteelemente (22) sowie wenigstens ein Teil der Abschirmelemente (24) angeordnet sind und diese Trägereinheiten (30) gemeinsam mit den daran angeordneten Teilen (22a) der Halteelemente (22) und den Abschirmelementen (24) von der Transporteinrichtung (2) demontierbar sind.

2. Vorrichtung (1) nach Anspruch 1,
**dadurch gekennzeichnet, dass**
wenigstens ein Halteelement (22) wenigstens zweiteilig ausgebildet ist und zwischen den Teilen (22a, 22b) des Halteelements eine lösbare Verbindung (22c) besteht.

3. Vorrichtung (1) nach Anspruch 2,
**dadurch gekennzeichnet, dass**
die lösbare Verbindung (22c) zwischen den Teilen (22a, 22b) die Übertragung von Drehmomenten ermöglicht.

4. Vorrichtung (1) nach wenigstens einem der vorangegangenen Ansprüche,
**dadurch gekennzeichnet, dass**
das an der Trägereinheit (30) angeordnete Teil (22a) des Halteelements drehbar gegenüber der Trägereinheit angeordnet ist.

5. Vorrichtung (1) nach wenigstens einem der vorangegangenen Ansprüche,
**dadurch gekennzeichnet, dass**
an der Transporteinrichtung Trägereinrichtungen (6) angeordnet sind, an denen die Trageeinheiten (30) lösbar angeordnet sind.

6. Vorrichtung (1) nach wenigstens einem der vorangegangenen Ansprüche,
**dadurch gekennzeichnet, dass**
die Trageeinheiten (30) über lösbare Befestigungseinrichtungen (40) an der Transporteinrichtung (2) angeordnet sind.

7. Vorrichtung (1) nach Anspruch 6,
**dadurch gekennzeichnet, dass**
wenigstens eine dieser Befestigungseinrichtungen aus einer Gruppe von Befestigungseinrichtungen ausgewählt ist, welche bajonettartige Befestigungseinrichtungen oder magnetische Befestigungseinrichtungen enthält.

8. Vorrichtung (1) nach wenigstens einem der vorangegangenen Ansprüche,
**dadurch gekennzeichnet, dass**
das an der Trägereinheit (30) angeordnete Teil (22a) des Halteelements in seiner Längsrichtung verschiebbar gegenüber der Trägereinheit (30) angeordnet ist.

9. Vorrichtung (1) nach wenigstens einem der vorangegangenen Ansprüche,
**dadurch gekennzeichnet, dass**
die Trägereinheit (30) ein Vorspannmittel aufweist, um das an der Trägereinheit (30) angeordnete Teil (22a) des Halteelements in seiner Längsrichtung vorzuspannen.

10. Haltevorrichtung (50) für Halteelemente (22) zum Halten von Kunststoffbehältnissen mit einer Trägereinheit (30), an der ein Abschirmelement (24) zum Abschirmen von Wärme sowie wenigstens ein Teil (22a) des Halteelements (22) angeordnet sind,
**dadurch gekennzeichnet, dass**
die Trägereinheit (30) weiterhin Befestigungsmittel (40) aufweist, um gemeinsam mit dem Abschirmelement (24) und dem Halteelement (22) an einer Transporteinrichtung (2) montiert und/oder von einer Transporteinrichtung demontiert zu werden.

11. Haltevorrichtung (50) nach Anspruch 10,
**dadurch gekennzeichnet, dass**
jeweils genau ein Halteelement (22) genau einem Abschirmelement (24) zugeordnet ist und dieses Halteelement (22) sowie dieses Abschirmelement (24) an genau einer Trägereinheit (30) angeordnet sind, wobei diese Trägereinheit bevorzugt lösbar mit einer Transporteinrichtung verbunden ist.

12. Haltevorrichtung (50) nach Anspruch 11,
**dadurch gekennzeichnet, dass**
das Abschirmelement (24) eine Öffnung aufweist, die größer ist als ein Durchmesser eines zu transportierenden Kunststoffvorformlings und wobei die Haltevorrichtung derart beschaffen ist, dass der Kunststoffvorformling mit seinem Mündungsbereich durch diese Öffnung beim Transport hindurchragt.

13. Verfahren zum Montieren oder Demontieren von Halteelementen (22) und Abschirmelementen (24) an eine oder von einer Vorrichtung zum Erwärmen von Kunststoffvorformlingen (10), wobei die Halteelemente (22) zum Halten von Kunststoffvorformlingen (10) dienen und die Abschirmelemente (24) zum Abhalten von Wärme von einem Gewindebereich der Kunststoffvorformlinge dienen,
**dadurch gekennzeichnet, dass**
zumindest Teile (22a) der Halteelemente (22) sowie wenigstens Teile der Abschirmelemente (24) an Trägereinheiten (30) angeordnet sind und diese Trägereinheiten (30) gemeinsam mit den daran angeordneten Teilen (22a) der Halteelemente (22) und Abschirmelementen (24) an eine oder von einer Transporteinrichtung (2) montiert oder demontiert werden.

14. Verfahren nach Anspruch 13,
**dadurch gekennzeichnet, dass**
die Abschirmelemente und die Halteelemente gleichzeitig gewechselt werden.

15. Verfahren nach Anspruch 14,
**dadurch gekennzeichnet, dass**
die Abschirmelemente relativ zu den sich drehenden Halteelementen drehfest an einem Träger (30) angeordnet sind.

## Claims

1. An apparatus for the heating of plastics material preforms (10), with a conveying device (2) which conveys the plastics material preforms along a preset conveying path (P), wherein a plurality of holding elements (22) for holding the plastics material preforms (10) and a plurality of screening elements (24) for screening off heat are arranged on the conveying device (2),
**characterized in that**
the apparatus (1) has a plurality of carrier units (30) on which at least one part (22a) of the holding elements (22) and at least one part of the screening elements (24) are arranged and these carrier units (30) are capable of being removed from the conveying device (2) jointly with the parts (22a) of the holding elements (22) which are arranged thereon and the screening elements (24).

2. An apparatus (1) according to claim 1,
**characterized in that**
at least one holding element (22) is designed in at least two parts and a releasable connection (22c) is present between the parts (22a, 22b) of the holding element.

3. An apparatus (1) according to claim 2,
**characterized in that**
the releasable connection (22c) between the parts (22a, 22b) allows the transmission of torques.

4. An apparatus (1) according to at least one of the preceding claims,
**characterized in that**
the part (22a) of the holding element arranged on the carrier unit (30) is arranged so as to be rotatable with respect to the carrier unit.

5. An apparatus (1) according to at least one of the preceding claims,
**characterized in that**
carrier devices (6), on which the carrier units (30) are releasably arranged, are arranged on the conveying device.

6. An apparatus (1) according to at least one of the preceding claims,
**characterized in that**
the carrier units (30) are arranged on the conveying device (2) by way of releasable fastening devices (40).

7. An apparatus (1) according to claim 6,
**characterized in that**
at least one of these fastening devices is selected from a group of fastening devices which contain bayonet-like fastening devices or magnetic fastening devices.

8. An apparatus (1) according to at least one of the preceding claims,
**characterized in that**
the part (22a) of the holding element arranged on the carrier unit (30) is arranged so as to be displaceable in its longitudinal direction with respect to the carrier unit (30).

9. An apparatus (1) according to at least one of the preceding claims,
**characterized in that**
the carrier unit (30) has a pre-stressing means in order to pre-stress the part (22a) of the holding element arranged on the carrier unit (30) in its longitudinal direction.

10. A holding apparatus (50) for holding elements (22) for the holding of plastics material containers with a carrier unit (30) on which a screening element (24) for screening off heat and at least one part (22a) of the holding element (22) are arranged,
**characterized in that**
the carrier unit (30) additionally has fastening means (40) in order to be mounted on a conveying device (2) and/or removed from a conveying device jointly with the screening element (24) and the holding element (22).

11. A holding apparatus (50) according to claim 10,
**characterized in that**
in each case exactly one holding element (22) is allocated to exactly one screening element (24) and this holding element (22) as well as this screening element (24) are allocated to exactly one carrier unit (30), wherein this carrier unit is preferably connected in a releasable manner with a conveying device.

12. A holding apparatus (50) according to claim 11,
**characterized in that**
the screening element (24) has an opening which is bigger than a diameter of a plastics material preform to be conveyed and wherein the holding device is of such a type that the plastics material preform penetrates this opening during transport with its mouth region.

13. A method of mounting or removing holding elements (22) and screening elements (24) on or from an apparatus for the heating of plastics material preforms (10), wherein the holding elements (22) serve to hold plastics material preforms (10) and the screening elements (24) serve to keep heat from a thread area of the plastics material preforms,
**characterized in that**
at least parts (22a) of the holding elements (22) and at least parts of the screening elements (24) are arranged on carrier units (30) and these carrier units (30) are mounted or removed to or from a conveying device (2) jointly with the parts (22a) of the holding elements (22) and screening elements (24) arranged on them.

14. A method according to claim 13,
**characterized in that**
the screening elements and the holding elements are changed at the same time.

15. A method according to claim 14,
**characterized in that**
the screening elements are arranged on a carrier (30) so as to be rotationally fixed relative to the rotating holding elements.

## Revendications

1. Dispositif de chauffage de préformes en matière plastique (10), avec un équipement de transport (2) qui transporte les préformes en matière plastique le long d'un chemin de transport (P) prédéfini, dans lequel est agencée contre l'équipement de transport (2) une pluralité d'éléments de maintien (22) pour maintenir les préformes en matière plastique (10) ainsi qu'une pluralité d'éléments faisant écran (24) pour faire écran à la chaleur,
**caractérisé en ce que**
le dispositif (1) présente une pluralité d'unités de support (30) contre lesquelles sont agencées au moins une partie (22a) des éléments de maintien (22) ainsi qu'au moins une partie des éléments faisant écran (24) et ces unités de support (30) étant démontables depuis l'équipement de transport (2) ensemble avec les parties (22a) des éléments de maintien (22) agencées contre elles et les éléments faisant écran (24).

2. Dispositif (1) selon la revendication 1,
**caractérisé en ce que**
au moins un élément de maintien (22) est formé en au moins deux parties et il existe une liaison amovible (22c) entre les parties (22a, 22b) de l'élément de maintien.

3. Dispositif (1) selon la revendication 2,
**caractérisé en ce que**
la liaison amovible (22c) entre les parties (22a, 22b) permet la transmission de couples.

4. Dispositif (1) selon au moins l'une des revendications précédentes,
**caractérisé en ce que**
la partie (22a) de l'élément de maintien agencée contre l'unité de support (30) est agencée de manière rotative par rapport à l'unité de support.

5. Dispositif (1) selon au moins l'une des revendications précédentes,
**caractérisé en ce que**
des équipements de support (6) sont agencés contre l'équipement de transport, contre lesquels les unités de support (30) sont agencées de manière amovible.

6. Dispositif (1) selon au moins l'une des revendications précédentes,
**caractérisé en ce que**
les unités de support (30) sont agencées contre l'équipement de transport (2) via des moyens de fixation (40) amovibles.

7. Dispositif (1) selon la revendication 6,
**caractérisé en ce que**
au moins l'un de ces moyens de fixation est sélectionné dans un groupe de moyens de fixation comprenant des moyens de fixation de type à baïonnette ou des moyens de fixation magnétiques.

8. Dispositif (1) selon au moins l'une des revendications précédentes,
**caractérisé en ce que**
la partie (22a) de l'élément de maintien agencée contre l'unité de support (30) est agencée dans sa direction longitudinale de manière coulissante par rapport à l'unité de support (30).

9. Dispositif (1) selon au moins l'une des revendications précédentes,
**caractérisé en ce que**
l'unité de support (30) présente un moyen de précontrainte pour précontraindre dans sa direction longitudinale la partie (22a) de l'élément de maintien agencée contre l'unité de support (30).

10. Dispositif de maintien (50) pour des éléments de maintien (22) pour maintenir des récipients en matière plastique avec une unité de support (30), contre laquelle sont agencés un élément faisant écran (24) pour faire écran à la chaleur ainsi qu'au moins une partie (22a) de l'élément de maintien (22),
**caractérisé en ce que**
l'unité de support (30) présente en outre des moyens de fixation (40) pour ensemble avec l'élément faisant écran (24) et l'élément de maintien (22) être montés sur un équipement de transport (2) et/ou démontés d'un équipement de transport.

11. Dispositif de maintien (50) selon la revendication 10,
**caractérisé en ce que**
exactement un élément de maintien (22) est affecté respectivement à exactement un élément faisant écran (24) et cet élément de maintien (22) ainsi que cet élément faisant écran (24) sont agencés contre exactement une unité de support (30), dans laquelle cette unité de support est reliée de préférence de manière amovible à un équipement de transport.

12. Dispositif de maintien (50) selon la revendication 11,
**caractérisé en ce que**
l'élément faisant écran (24) présente une ouverture qui est plus grande qu'un diamètre d'une préforme en matière plastique à transporter et dans lequel le dispositif de maintien est conçu de telle sorte que lors du transport, la préforme en matière plastique passe avec sa zone de débouché à travers cette ouverture.

13. Procédé de montage ou de démontage d'éléments de maintien (22) et d'éléments faisant écran (24) sur ou depuis un appareil de chauffage de préformes en matière plastique (10), dans lequel les éléments de maintien (22) servent à maintenir des préformes en matière plastique (10) et les éléments faisant écran (24) servent à tenir une chaleur éloignée d'une zone filetée des préformes en matière plastique,
**caractérisé en ce que**
au moins des parties (22a) des éléments de maintien (22) ainsi qu'au moins des parties des éléments faisant écran (24) sont agencées contre des unités de support (30) et ces unités de support (30) ensemble avec les parties (22a) des éléments de maintien (22) et les éléments faisant écran (24) agencés contre elles sont montés ou démontés sur ou depuis un équipement de transport (2).

14. Procédé selon la revendication 13,
**caractérisé en ce que**
les éléments faisant écran et les éléments de maintien sont remplacés simultanément.

15. Procédé selon la revendication 14,
**caractérisé en ce que**
les éléments faisant écran sont agencés contre un support (30) en rotation solidaire par rapport aux éléments de maintien rotatifs.
